**Europäisches Patentamt**

**European Patent Office**

**Office européen des brevets**

(19)

(11) Veröffentlichungsnummer: **0 229 613**
**A2**

(12) # EUROPÄISCHE PATENTANMELDUNG

(21) Anmeldenummer: **87100033.7**

(22) Anmeldetag: **03.01.87**

(51) Int. Cl.³: **B 60 N 3/08**

(30) Priorität: **15.01.86 DE 8600821 U**

(43) Veröffentlichungstag der Anmeldung:
**22.07.87 Patentblatt 87/30**

(84) Benannte Vertragsstaaten:
**DE ES FR GB IT**

(71) Anmelder: **Ignaz Vogel GmbH & Co KG, Fahrzeugsitze**
**Kleinsteinbacher Strasse 42-44**
**D-7500 Karlsruhe 41-Stu(DE)**

(72) Erfinder: **Vogel, Ignaz, Dipl.-Ing.**
**Kleinsteinbacher Strasse 44**
**D-7500 Karlsruhe 41-Stu(DE)**

(74) Vertreter: **Trappenberg, Hans**
**Wendtstrasse 1**
**D-7500 Karlsruhe 21(DE)**

(54) **Doppel-Fahrgastsitz.**

(57) In den meisten, auch modernen Omnibussen, fehlen für jeden Fahrgast erreichbare Abfallbehälter. Nach der Erfindung wird ein Abfallbehälter vorgeschlagen, der an der Unterseite des Sitzuntergestells der Fahrgastsitze längsverschiebbar angebracht ist.

Fig 1

**EP 0 229 613 A2**

04.12.1986 n44

VW 1281

Ignaz Vogel GmbH & Co. KG, Fahrzeugsitze
Kleinsteinbacher Str. 42 - 44, 7500 Karlsruhe 41-Stu.

Doppel-Fahrgastsitz

Die Erfindung betrifft einen Doppel-Fahrgastsitz mit abdeckbarem Abfallbehälter, bei dem die Sitze nebeneinander auf
einem Untergestell angeordnet sind.

Insbesondere Reisebusse, mit denen längere Fahrten durchgeführt werden, sind mit verhältnismäßig hohem Komfort augestattet. So sind die Fahrgastsitze, die im allgemeinen als
Doppel-Fahrgastsitze beidseits eines Ganges angeordnet
sind, in ihrer Lage verstellbar, es sind wegklappbare Armstützen, Fußstützen, Ascher und Netze zum Aufbewahren von
Zeitungen etc. vorgesehen, jedoch fehlen bei den meisten
Ausstattungen Abfallbehälter zur Aufnahme von bei derartigen Fahrten unvermeidlichem Abfall. Die Reisenden müssen
sich daher irgendwie behelfen, indem sie den Abfall mehr
oder weniger verpackt in die für Zeitungen etc. bestimmten Taschen oder auch auf den Boden des Fahrgastraums deponieren oder auch einfach unter die Sitze schieben. Bei verhältnismäßig wenigen Ausstattungen sind gangseits, seitlich der Doppel-Fahrgastsitze, ausschwenkbare Abfallbehälter vorgesehen, die allerdings wenig benutzt werden, da sie zum einen den Durchgang durch den Gang stören und zum anderen von den fensterseitig sitzenden Passagieren nicht zu erreichen sind. Die Folge ist nicht nur ein unordentliches, unsauberes und unhygienisches Aussehen eines derartigen Reisebusses, sondern auch sehr hohe, zeitraubende Reinigungskosten.

Um die geschilderten Zustände zu vermeiden, wird nach der Erfindung vorgeschlagen, daß an der Unterseite des Sitzuntergestells in Längsrichtung der Sitze liegende, bis etwa zur Sitzvorderkante reichende Längsführungen für einen Abfalltrog angeordnet sind und daß zwischen den Längsführungen ein den Abfalltrog abdeckendes Abdeckblech angebracht ist.

Nicht also wie bei der bisher bekannten Ausführung wird ein Abfallbehälter außerhalb der Sitzgruppe, in Benutzungsstellung in den Gang hineinragend, angeordnet, sondern an der Unterseite des Fahrgastsitzes, für jeden Fahrgast leicht erreichbar. Darüberhinaus ist als Abfallbehälter ein Abfalltrog vorgesehen, der längsverschiebbar ist, so daß nach Einwerfen des Abfalls der Abfalltrog wieder unter den Sitz zurückgeschoben werden kann, wodurch er automatisch abgedeckt wird. Dies ist wichtig beispielsweise, wenn Obst oder sonstige Lebensmittelreste in dem Abfalltrog deponiert werden, die, insbesondere bei längerer Wärmeeinwirkung, zu Geruchsbelästigungen führen können. Statt daß der Abfalltrog nach der Erfindung unter jedem Fahrgastsitz angebracht ist, kann er auch etwa in der Mitte an der Unterseite zwischen den beiden Fahrgastsitzen vorgesehen sein, wo er auch jedem Passagier zugänglich ist.

Auf der Zeichnung ist ein Auführungsbeispiel eines derartigen abdeckbaren Abfallbehälters dargestellt, und zwar zeigen:

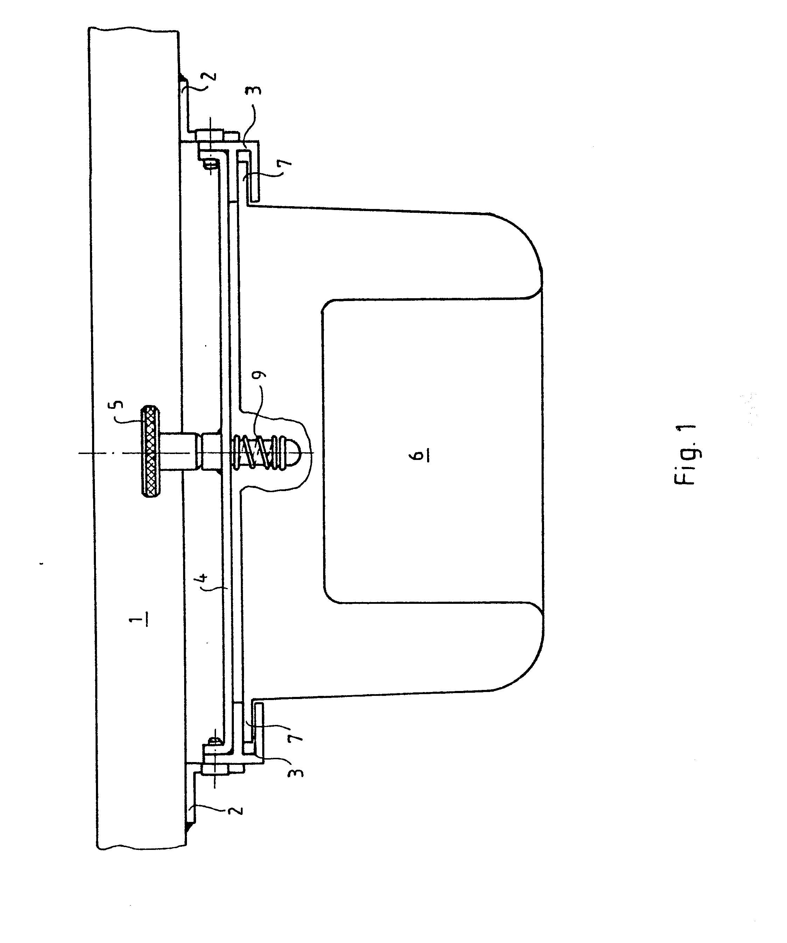

Fig. 1  eine Vorderansicht und

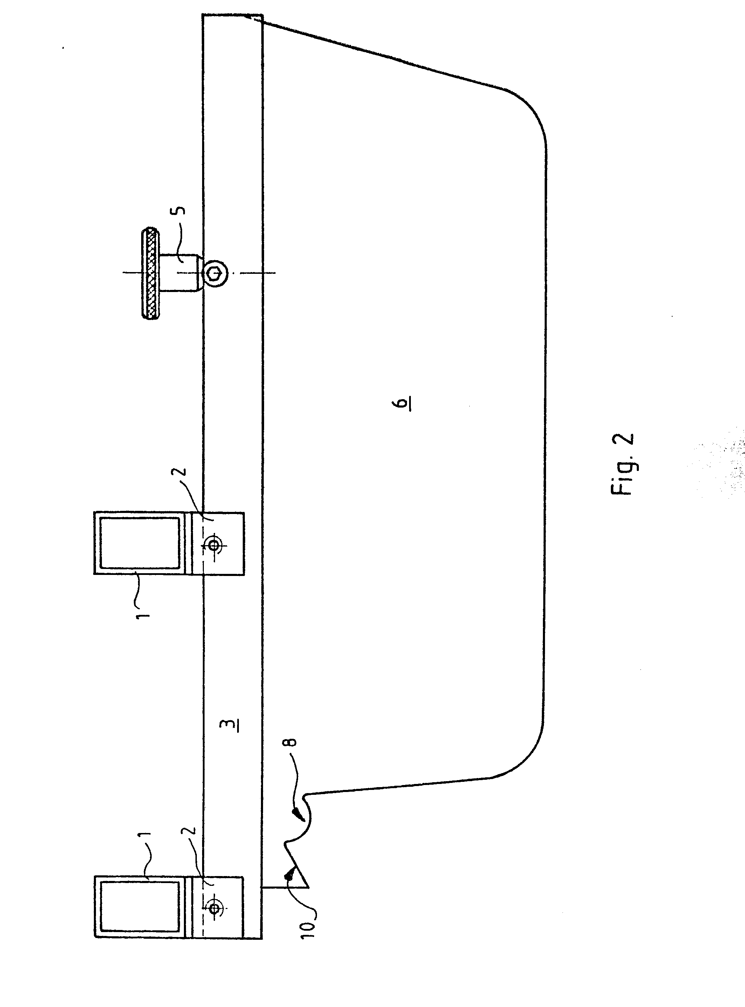

Fig. 2  eine Seitenansicht der neuerungsgemäßen
Konstruktion.

An der Unterseite des Untergestells 1 eines Doppel-Fahrgastsitzes sind über Winkelflansche 2 geschlitzte Schienen 3 angebracht. Zwischen den Schienen 3 ist ein Abdeckblech 4 angebracht, zusammen mit einem federbelasteten Sperrbolzen 5. Der Sperrbolzen 5 ragt in einen Abfalltrog 6 hinein, der mittels Führungsleisten 7 in den Schlitzen des Schienenpaares 3 geführt ist.

Zum Gebrauch kann der Abfalltrog 6 nach vorne herausgezogen werden, wobei der Sperrbolzen 5 in eine bei der Rückwand des Abfalltrogs 6 vorgesehene Rinne 7 eingreift und somit den Abfalltrog 6 in der herausgezogenen Stellung hält. Zum Entleeren des Abfalltrogs 6 wird der Sperrbolzen 5 gegen die Kraft der Feder 9 bis an einen Anschlag hochgezogen, wonach der Trog aus den Schienen 3 herausgeführt und entleert werden kann. Beim Einschieben des Trogs 6 zwischen die Längsführungen (Schienen 3) schlägt eine Rampe 10 am Sperrbolzen 5 an und drückt den Sperrbolzen nach oben, so daß der Abfalltrog 6, geführt durch das Schienenpaar 3, in seine hintere Lage geführt werden kann.

04.12.1986 n44

VW 1281

Ignaz Vogel GmbH & Co. KG, Fahrzeugsitze

Kleinsteinbacher Str. 42 - 44, 7500 Karlsruhe 41-Stu.


## P A T E N T A N S P R Ü C H E

1. Doppel-Fahrgastsitz mit abdeckbarem Abfallbehälter, bei
dem die Sitze nebeneinander auf einem Untergestell angeordnet sind,

dadurch gekennzeichnet,

daß an der Unterseite des Sitzuntergestells (1) in Längsrichtung der Sitze liegende, bis etwa zur Sitzvorderkante
reichende Längsführungen (Schienen 3) für einen Abfalltrog (6) angeordnet sind und daß zwischen den Längsführungen (Schienen 3) ein den Abfalltrog (6) abdeckendes Abdeckblech (4) angebracht ist.


2. Doppel-Fahrgastsitz nach Anspruch 1,
dadurch gekennzeichnet,
daß die Längsführungen (Schienen 3) etwa unterhalb der
Stoßstelle der beiden Sitze am Untergestell (1) angebracht
sind.

0229613

3. Doppel-Fahrgastsitz nach Anspruch 1 oder 2,
dadurch gekennzeichnet,
daß die Längsführungen geschlitzte Schienen (3) sind, in
die seitlich vom Trog (6) abstehende Führungsleisten (7)
eingreifen.

4. Doppel-Fahrgastsitz nach einem oder mehreren
der vorhergehenden Ansprüche,
dadurch gekennzeichnet,
daß der Abfalltrog (6) aus Kunststoff ist.

5. Doppel-Fahrgastsitz nach einem oder mehreren
der vorhergehenden Ansprüche,
dadurch gekennzeichnet,
daß zwischen den Längsführungen (Schienen 3) ein in den
Abfalltrog (6) hineinreichender Sperrbolzen (5) angeordnet
ist.

6. Doppel-Fahrgastsitz nach Anspruch 5,
dadurch gekennzeichnet,
daß der Sperrbolzen (5) gegen die Kraft einer Feder (9)
herausziehbar ist und daß an die Außenseite der Trogrückwand eine Auflauframpe (10) und ihr gegenüberliegend an die
Innenseite eine Rinne (8) angeformt ist.

0229613

Fig. 1

Fig. 2